# NEW EUROPEAN PATENT SPECIFICATION

(11) **EP 2 856 845 B2**
(45) Date of publication and mention of the opposition decision: **20.04.2022**
(45) Mention of the grant of the patent: 30.08.2017
(21) Application number: 13741841.4
(22) Date of filing: 04.06.2013
(51) Int. Cl.: H05B 37/02

(54) **A METHOD FOR PROVIDING PRIVACY PROTECTION IN NETWORKED LIGHTING CONTROL SYSTEMS**
VERFAHREN ZUR BEREITSTELLUNG VON DATENSCHUTZ BEI VERNETZTEN BELEUCHTUNGSSTEUERUNGSSYSTEMEN
PROCÉDÉ POUR ASSURER LA PROTECTION DE LA VIE PRIVÉE DANS DES SYSTÈMES DE COMMANDE D'ÉCLAIRAGE EN RÉSEAU

(30) Priority: 04.06.2012 US 201261655029 P
(43) Date of publication of application: 08.04.2015
(73) Proprietor: Signify Holding B.V., 5656 AE Eindhoven (NL)
(72) Inventor: PATEL, Maulin Dahyabhai, NL-5656 AE Eindhoven (NL); MANI, Murali, NL-5656 AE Eindhoven (NL)
(74) Representative: van Eeuwijk, Alexander Henricus Waltherus
(86) International application number: PCT/IB2013/054586
(87) International publication number: WO 2013/182982

(56) References cited:
- WO-A1-2011/001320
- US-A1- 2006 161 394
- US-A1- 2012 040 606

## Description

This application relates to the field of light management systems and more particularly to a method and a system to protect the privacy of lighting control system users and allow them to customize their privacy settings, while minimally impacting the ability to perform Total Light Management using a Networked Lighting Control System (NLCS). This is of interest to building occupants, building administrators, city light operators, parking lot light operators, and in general, to providers of Total Light Management Services (TLMS) in both indoor and outdoor environments.

An NLCS system is an essential component of total light management solutions and services that generate energy savings to end users and potential sources of recurring revenue to operators. NLCSs acquire and process sensor readings that track the location data of users, their preferences and system parameters in a database. Elements of this data have privacy implications. For example, occupancy sensor data from a private office can be used to deduce how much time a given office worker spends in his/her office. This has employment law and anti-discrimination implications. Law-enforcement agencies can subpoena occupancy data. Occupancy data could be used against an organization (e.g. "Federal agency XYZ's employees spend less than 4 hours at their desks, wasting taxpayers' money"). Storing light settings for a vision impaired individual in an identifiable way could violate user's privacy rights.

Another example involving privacy issues relates to the field of light therapy. Light therapy is a potential treatment for various disorders such as depression and Post Traumatic Stress Disorder. One could envisage a NLCS for a healthcare facility where lights are set according to the light therapist's prescription. Thus, the light settings could be linked to patient's health records. In these scenarios, the Service Provider of NLCS could be held responsible if data is misused.

Yet another example relates to an outdoor setting in which street-lamp mounted motion detectors in proximity to an individual's home, workplace, or other area being monitored can provide location information relative to the individual. By way of example, it could be deduced statistically when a person leaves or arrives at his home by using correlated data obtained from adjacent street lamps on his street. As used herein, the term "home" is meant to include any type of structure in which a user may reside: such as, but not limited to, an apartment, townhouse, condominium, or single family dwelling. If that data is further correlated with time of day, it could be used to pinpoint with relatively high accuracy, repeating behavior, such as when they leave for work or return home at night. Further, when street lamp time-stamps are correlated with other time-stamped data, such as cell-phone time and geolocation data, one could deduce exactly when a person passed a streetlamp in his/her car if he was talking or texting while driving. While gathering of such data may have a legitimate purpose, obtaining consent of the person being monitored may be required to comply with privacy laws in many jurisdictions.

Considerations for the privacy of end-users (and system administrators) must be built into NLCSs in order to make them compliant with laws and regulations and to comply with various company privacy code and rules that respect the privacy of customers and business partners. Privacy compliance will promote the adoption of TLMS in the market.

Energy efficiency and the comfort of occupants are the main drivers for total light management. Integrated control of artificial lights and motorized blinds in a Networked Lighting Control System (NLCS) is important for the optimal use of natural light and artificial light in achieving these goals.

A Hybrid Integrated Lighting and Daylight Control (ILDC) system comprising of Philips sensors, lights, dimming ballasts, networking infrastructure, user interfaces and Somfy motorized blinds has been developed by Philips Research North America. In such a conventional integrated lighting and window covering system there typically exist wireless connectivity among sensors and actuators within a zone and wired connectivity across zones (thus "hybrid") to enable building-wide deployment. It should be noted that such an ILDC system is just one example of a TLMS and an NLCS in particular.

Each user's workstation is associated with corresponding sensors, thermostat, window blinds and fixtures to enable personalized integrated control. Typically, these controls may be operated in both a manual and an automatic mode. In an automatic mode, the system combines user preferences with sensor readings (occupancy and light level) to harvest natural light through integrated control of motorized blinds and electric light. Artificial lights are regulated using occupancy and light sensors. If the space is occupied, blinds are open to allow in daylight to an extent that does not cause discomfort (glare); moreover, lights are dimmed to the level such that the overall illumination meets the user's requirement.

Data related to these various parameters can be collected at a central location. Accordingly, in light of the privacy concerns discussed above, a need exists to provide each individual user with options as to how data related to him/her can be collected and utilized.

US 2012/040606 discloses an outdoor lighting fixture including at least a first ballast for controllably providing power to at least one lamp for illuminating an outdoor area.

US 2006/161394 discloses a method of device maintenance, comprising: providing a maintenance network including a user site and a multi-device servicing site that provides maintenance to at least one target device in said user site; selecting, by a user, a degree of access of maintenance functions of said servicing site to at least one of maintenance-related information of said target device and commanding said target device to perform a maintenance-related task; and setting said degree of access.

WO 2011/001320 discloses systems and methods for managing interacting with controllable lighting networks.

The current invention addresses those privacy concerns of the lighting system user. In one aspect of the invention, the content and method of aggregating and storing data related to an individual is changeable by means of options set by the individual involved. Current (or operational) sensor data can and will be used by the NLCS for Total Light Management purposes. Thereby the operational efficiency of the system is unaffected by these privacy choices. What is affected is the way in which stored data could be processed at a later time for problem resolution or improvements in the system performance or quality of service.

Aspects of the methods and apparatus disclosed herein are described in conjunction with and particularly suited for utilization in a lighting control panel.However, one or more aspects of the methods and apparatus described herein may be implemented in other configurations such as, for example, other control products such as personal computers, tablets, push button controllers, smart phones, voice or gesture recognition controllers, window treatment controllers, thermostats and/or ventilation systems that may be installed in a lighting control system.

The above and other exemplary features, aspects, and advantages of the present invention will be more apparent from the following detailed description taken in conjunction with the accompanying drawings, in which:
Figure 1 illustrates a conventional integrated lighting and window covering system.
Figure 2 illustrates a schematic of conventional integrated lighting and window covering system.
Figure 3 illustrates a sample user interface for privacy notice selection.
Figure 4 illustrates a sample user interface for selecting privacy preferences.
Figure 5 illustrates a sample user interface for selecting de-identified data elements.
Figure 6 illustrates a sample user interface for selecting the purpose for which data can be used.
Figure 7 illustrates a sample user interface for selecting the opt-in data elements.
Figure 8 illustrates a flow chart depicting an embodiment of the invention.
Figure 9 illustrates exemplary system architecture and components for implementing the invention in an indoor or office environment.
Figure 10 illustrates exemplary system architecture and components for implementing the invention in an outdoor environment.

It is to be understood that these drawings are solely for purposes of illustrating the concepts of the invention and are not intended as a definition of the limits of the invention. It will be appreciated that the same reference numerals, possibly supplemented with reference characters, where appropriate, have been used throughout to identify corresponding parts.

Existing lighting control and shading systems typically operate independently, thereby leading to sub-optimal energy efficiency and causing inconvenience to users. Integrated control of artificial lights and motorized blinds provides for optimal use of natural light and artificial light while enhancing user comfort and productivity.

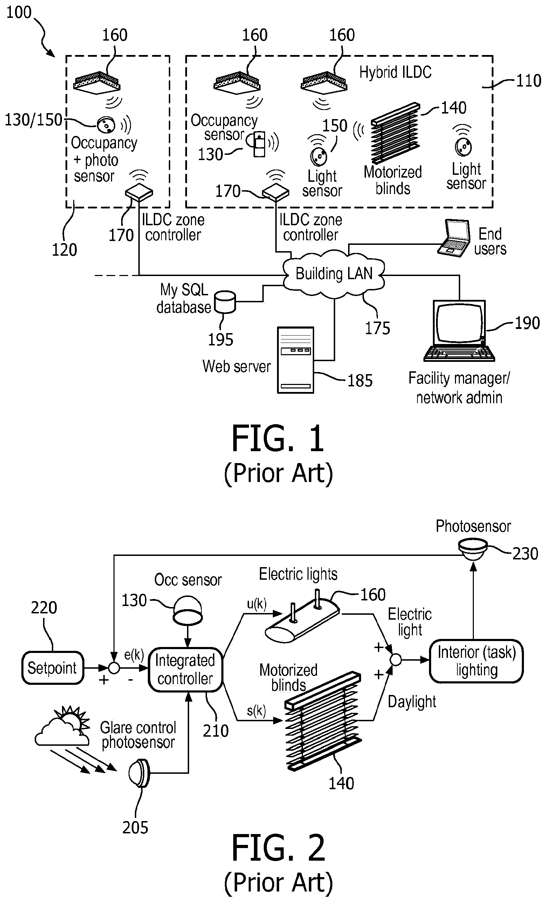

Figure 1 illustrates a conventional ILDC system 100 wherein, each user's workstation or zone is associated with corresponding sensors, window blinds and fixtures to enable personalized integrated control. The system combines user preferences with sensor readings (occupancy and light level) to harvest natural light through integrated control of motorized blinds and electric light.

Each workstation or zone 110, 120 may incorporate motion sensors 130 and/or motorized blinds 140. In addition, light sensors 150 may be included, which monitor ambient light levels.

The motion sensors (occupancy sensors) 130 detect motion, as previously described, activate the lights 160. In addition, blinds 140 are capable of receiving commands to control the height of the blind and the angle of the blind with respect to a horizontal axis.

Each workstation or zone further includes control sensors 170 that monitor the corresponding workstation and provide control signals to at least the motorized blinds. The control sensors 170 are in communication, via a network 175, to a centralized control system 180 that maybe represented by server 185 and computer 190. The information obtained from the control units 170 may further be stored on permanent storage medium, depicted as MySQL Database 195 in the embodiment of Figure 1.

Figure 2 illustrates in further detail the integrated aspect of the ILDC system. In this case, occupational (occupancy) sensor 130 and glare control photo sensor 205 provide signals to integrated controller 210. The occupancy sensor 130, as discussed, provides a signal when motion is detected. The glare control photo sensor provides signals with regard to a level of glare or sunlight that is entering the workspace. Setpoint 220 provides a reference point against which the photo-sensor 230 output is compared. The deviation from setpoint 220 is deduced to derive the amount of artificial light from lighting system 160 that is needed, in combination with natural light, to satisfy the overall illumination needs of the user. That is artificial lights are regulated using occupancy sensor 130 and light sensors 150 and/or photosensor 230. The artificial lights are turned OFF when the space is vacant. When the space is occupied, blinds 140 are open to allow in daylight to an extent that the daylight does not cause discomfort (glare). The artificial light is dimmed so that the combination of artificial light and natural light meets the user's requirement.

The integrated controller 210 receives inputs from the setpoint 220, the occupancy sensor 130, photosensor 230 and the glare control sensor 205 to determine settings for the amount of artificial light and amount of natural light by adjusting the window covering (e.g., slat cutoff angle, window covering height, etc.). The photo sensor 230 monitors the level of light in the workspace and provides this information, as a feedback, to the integrated controller 210.

In determining the positions of the blinds, an open-loop blind height and slat angle control algorithm is implemented in ILDC system. Using a blind motor, the algorithm adapts blind height and slat angle periodically to avoid glare and enable daylight harvesting. A "cut-off angle" and "cut-off height" are calculated based factors such as latitude, longitude, orientation of window, date, local time and slat geometry. An example of the algorithm for computing the cut-off angle (defined as the angle beyond which no direct radiation is being transmitted through the slats) for blind slats may be found in "The Impact of Venetian Blind Geometry and Tilt Angle on View, Direct Light Transmission and Interior Illuminance," A. Tzempelikos, Solar Energy, vol. 82, no. 12, pp. 1172-1191, December 2008.

As noted above, the MySQL Database 195 of Figure 1 permits storing of the configuration information for each zone -- including device types and their locations, user credentials, user preferences and other system parameters. It is also used to log data containing real-time monitoring information of several system performance and operational metrics. MySQL is configured with system parameters at the time of commissioning the system. Examples of system configuration parameters include user credentials, IP addresses of zone controllers, device types and associations between devices and users.

In an NLCS system performance and operational data stored in MySQL 195 or similar database enables real-time display of system state to users, network administrators and facility managers. Furthermore, the stored data can be exploited for off-line analysis of usage patterns, energy savings, failures modes, light distributions and occupancy patterns.

In a modern lighting control system, sensors (e.g. motion) and actuators (e.g. lights) are linked to individual users to personalize system performance. Users can input their preferences via user interfaces which drive the system behavior. Sensor readings, user preferences and system parameters are stored in a database.

Sensor readings and user preferences in a NLCS have privacy and security implications. Building occupants have a reasonable expectation of privacy in their workplace. In the European Union there can be regulatory requirements on systems that process occupancy measurements that can be used to identify individuals. Such regulations include the requirement for Informed Consent before personally identifiable data is collected and the right of an individual to request information from the provider as to the processing of his/her personal data, including the right to "forget" the data.

Listed below are some examples of privacy and security implications of sensor measurements in a NLCS:
- Occupancy sensor data from a private office can be used to deduce how much time a given office worker spends in his/her office - this has employment law and anti-discrimination implications.
- Occupancy data can be used by an employer against the employee occupant (e.g. a guard was away from his/her desk for prolong time or during a specific event)
- Spouse can subpoena occupancy data for divorce proceedings
- FBI, Law-enforcement can subpoena occupancy data (like Cell-phone, EZ-pass toll records)
- Occupancy data could be used against an organization (e.g. "Federal agency XYZ's employees spend less than 4 hrs on their desk wasting taxpayer's money")
- Real-time occupancy data can be exploited by a malicious entity to mount a coordinated attack (e.g. General xyz is in his office at this time, or the building is 90% occupied which makes it a high-value target)
- Lighting systems can be personalized for individual users. A vision impaired user could require more light. Storing vision impairment information in the database in an identifiable way could violate user's privacy rights.
- Light therapy is a recommended treatment for patients suffering for depression or Post Traumatic Stress Disorder. In a nursing home, hospital or mental health facility the light settings could be tailored for patients conditions. One could envisage a lighting control system for a psychiatric ward where light are set according to the prescription from a light therapist. In this case the settings in a given room could be linked to patient's health records.
- Street location/movement information can be used by malicious users to stage a robbery. It could also be used by law-enforcement to surreptitiously track movement or determine past history of movement.

Further, in many installations, the NLCS systems are interfaced with third party systems. By way of example, Philips and Somfy have partnered to develop and market integrated lighting and motorized blind solutions. In this case, Philips system will provide room occupancy state information to Somfy system. Arguably, Philips could be held responsible if data is misused. Hence, it is crucial to develop methods to protect the security of networked lighting system and privacy of users.

Many protocols and methods (cookies, etc.) for online behavior tracking have been proposed or are in use for web-browsers and web-applications. Several privacy protection protocols and methods (P3P, "Do-not-track" protocols from Microsoft and Mozilla, etc.) have been proposed or have been deployed to allow users to control what is being tracked or recorded.
- The P3P policy and protocol lists the following purposes for identifiable information:
- <current/> Completion and Support of Activity For Which Data Was Provided:
- <admin/> Web Site and System Administration:
- <develop/> Research and Development:
- <tailoring/> One-time Tailoring:
- <pseudo-analysis/> Pseudonymous Analysis:
- <pseudo-decision/> Pseudonymous Decision:
- <individual-analysis/> Individual Analysis:
- <individual-decision/> Individual Decision
- <contact/> Contacting Visitors for Marketing of Services or Products:
- <historical/> Historical Preservation:
- <telemarketing/> Contacting Visitors for Marketing of Services or Products Via Telephone:
- <other-purpose> string </other-purpose> Other Uses:

Each type of purpose (with the exception of current) can have the following optional attribute:

### Required

The attribute can take the following values:
always: The purpose is always required; users cannot opt-in or opt-out of this use of their data. This is the default when no required attribute is present.
opt-in: Data may be used for this purpose only when the user affirmatively requests this use
opt-out: Data may be used for this purpose unless the user requests that it not be used in this way.

In one aspect of the present invention, the personal privacy preferences of an individual could be an extension to an existing protocol (like P3P). In various embodiments of the invention, it is envisaged that the NLCS is a web-based application where the lighting system is operated and monitored as a web-application. End-users are permitted some level of access to such a system -- e.g., to set their privacy preferences or to request that the lighting in their work space be made brighter (or dimmer). In further embodiments, a user's personal privacy settings (such as P3P settings) on his/her browser can be automatically uploaded when he/she logs in. Thus, by way of example, the user does not need to specifically request privacy setting changes as they can be determined from his/her browser (or Facebook or other) privacy settings.

The present invention provides a system and methods for protecting the privacy rights of the individual lighting system users while maintaining the overall functionality of the NLCS. That is, in the present invention the content and method of aggregating and storing data is permitted to be modified by individual users. In various embodiments of the invention, current (or operational) sensor data can and will continue to be used by the NLCS for Total Light Management purposes. Thereby the operational efficiency of the system is unaffected by these privacy choices. What is affected is the way in which stored data could be processed at a later time for problem resolution or improvements in the system performance or quality of service. That is, data is available for analysis but that data cannot be associated with an individual user if he had invoked privacy restrictions as described below.

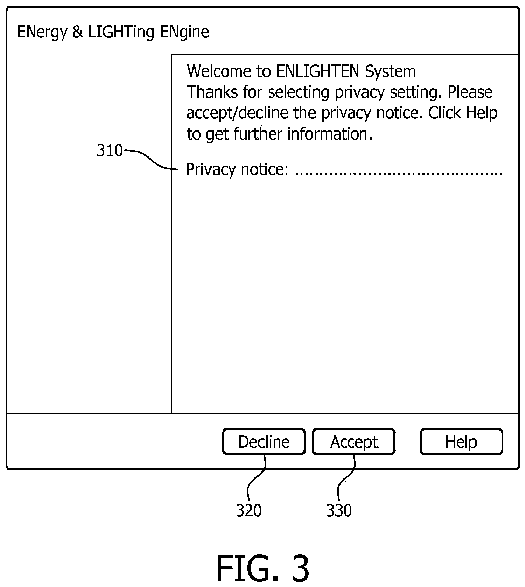

As described below, the current invention contemplates a plurality of methods in permitting a user to invoke various privacy options. In one embodiment of the invention and as depicted in Figure 3, an appropriate privacy policy notice 310 is displayed for user to accept 320 or decline 330. The user is prompted to make a selection before proceeding further.

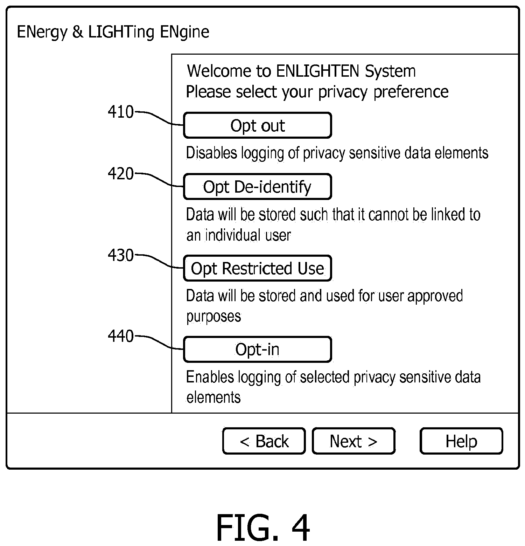

In the event the user selects the Accept option, an additional GUI interface is displayed that presents various privacy options to the user. Figure 4 illustrates an exemplary GUI menu which displays "Opt out" 410, "Opt De-identify" 420, "Opt Restricted Use" 430 and "Opt in" 440 selections.

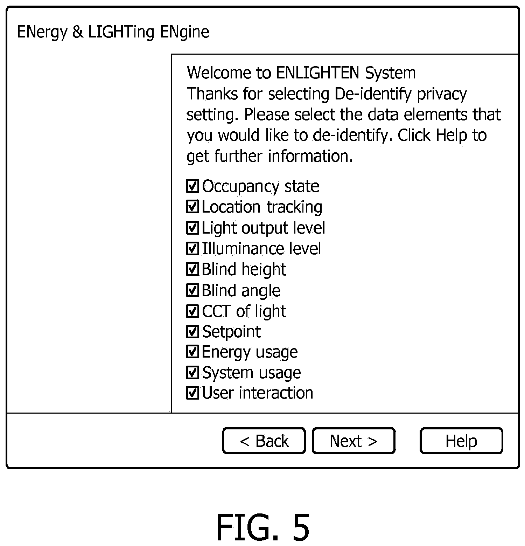

It should be noted that in various embodiments of the invention these selection menus are displayed upon initial deployment of the system, upon a new occupant moving into a zone, periodically, or when the privacy policy is changed. Further, it is contemplated that the GUI screen exemplified by Figure 3 is optional. That is, a user would be immediately presented with the GUI screen exemplified by Figure 4, thereby requiring him to take an affirmative act in selecting or declining the privacy options available. These options will now be discussed in greater detail:
"Opt out" selection 410:
   This selection permits the user to opt-out from any identifiable data collected by the lighting system. That is, this selection results in disabling the logging of privacy sensitive data elements (such as occupancy, motion, light level, temperature, etc...). Consequently, the system will not store opt-out data elements.
"Opt De-Identify" selection 420:
   The selection of this option results in a GUI menu exemplified by Figure 5 being presented to the user. For each of the data elements selected, data will be stored such that it cannot be linked to an individual user thereby protecting the user's privacy. The system could provide the requested privacy yet preserve the utility of the data elements for statistical analysis. Various embodiments of the invention accomplish this feature by performing one or more of the following functions:
   - Remove primary keys from the database tables storing privacy sensitive information (e.g., do not store the ID of occupancy sensor in the occupancy log table);
   - In the case of outdoor lighting, do not store the Geo-location of the streetlamp or the ID of the streetlamp;
   - Store dummy values for userID, roomID, Occupancy sensor ID, etc. (e.g. use a randomized pseudonym for each user every day). This method allows individual user data to be used for statistical analysis without identifying the user(s) involved;
   - Use offsetted future values for datetime fields;
   - Combine data from multiple users so that data is anonymized; and,
   - Combine data from multiple sensors (e.g. 'OR' occupancy information) so that information cannot be traced to users

Additional embodiments of the invention provide the requested privacy at the cost of limiting the utility of data elements for statistical analysis (i.e., some information is lost). These embodiments of the invention accomplish this feature by performing one or more of the following functions:
- Use time-based averaging (e.g., store only moving averages over many days); and,
- Randomize the data with some stochastic noise. (i.e., spurious data)

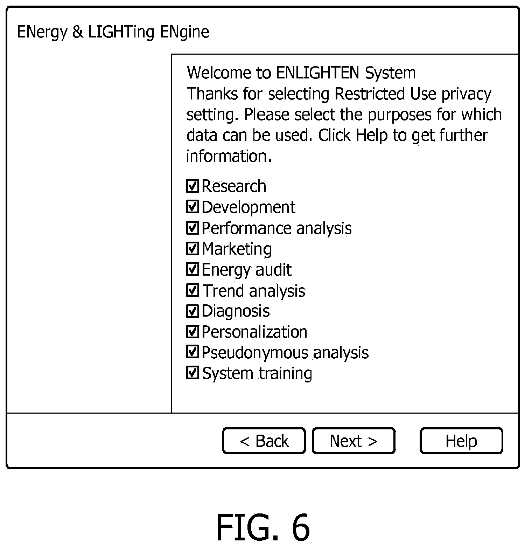

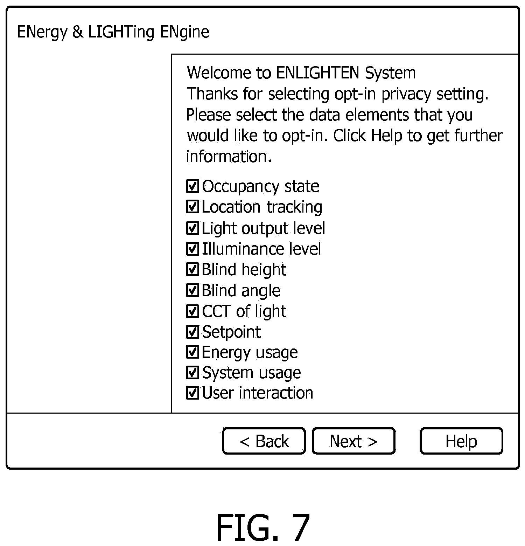

"Opt Restricted Use" selection 430:
   The selection of this option results in a GUI menu exemplified by Figure 6 being presented to the user which lists the purposes for which collected data can be used (e.g., research and development, system performance analysis, energy audit, one-time tailoring, trend analysis, debugging, personalization, etc.)
"Opt In" selection 440:
   The selection of this option results in a GUI menu exemplified by Figure 7 being presented to the user whereby he/she is offered a choice to opt-in various data elements available in the collection process. That is, the user is given control over the types of data collected by the system -- the system will only store the selected opt-in data elements.

In additional embodiments of the invention, a user is required to log-in or otherwise authenticate himself before being able to select various options. Further, an individual would be limited in making these selections with respect to the specific room or office space that has been assigned to him. A central server or database would maintain passwords, work space assignments, and other data that is required to implement these features. In further embodiments this central location would also prevent users from making selections (inadvertently, or otherwise) that are contrary to corporate policy or governmental laws. Thus by way of example, a user may not elect recording of data related to "his" office space unless any and all workers who share that space also make that election.

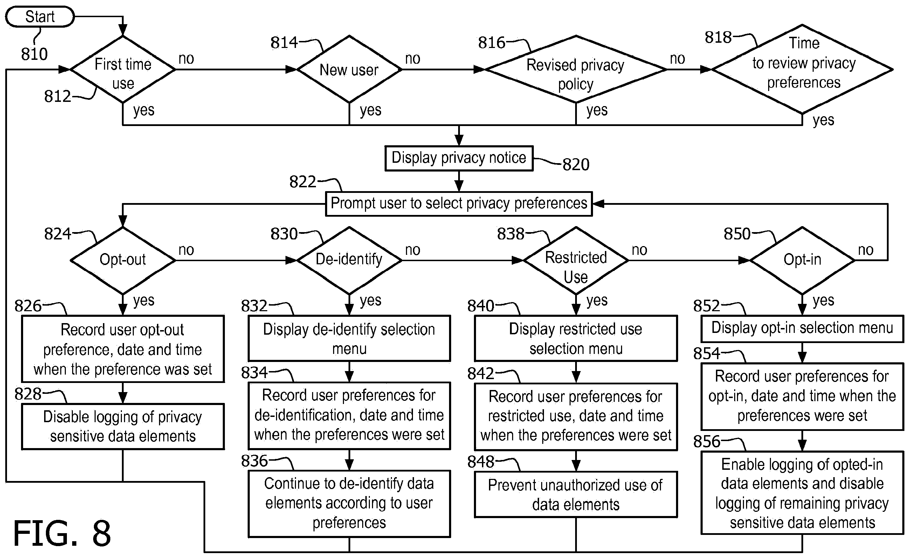

Figure 8 illustrates an exemplary embodiment of the present invention. At blocks 812 - 818, a determination is made whether this is a "First time use" of the system (Block 812), a "New user" (block 814), "Revised privacy policy" (block 816) and "Time to review privacy preferences" (block 818). If "yes" to either of these criteria, the method proceeds to block 820 where a "Display privacy notice" occurs.

Block 822 then prompts the user to select his privacy preferences. The system then determines which initial selection the user makes: "Opt-out" (block 824), "De-identify" (block 830), "Restricted Use" (block 838) or "Opt-in" (block 850). These selections correspond to items 410-440 of Figure 4. In the event the selection was "Opt-out" (block 824), the system proceeds to block 826 where the opt-out preference(s) are recorded and time-stamped. At block 828 the system then performs the requested function by disabling logging of privacy sensitive data elements.

In the event the selection was "De-identify" (block 830), the system presents a selection menu to the user (block 832) and the subsequent selections are recorded and time-stamped (block 834). At block 836 the system then performs the requested function by de-identifying data elements according to the selected user preferences.

Similarly, in the event the selection was "Restricted Use" (block 838), the system presents a selection menu to the user (block 840) and the subsequent selections are recorded and time-stamped (block 842). At block 848 the system then performs the requested function by blocking unauthorized use of data elements.

In the event the selection was "Opt-in" (block 850), the system presents a selection menu to the user (block 852) and the subsequent selections are recorded and time-stamped (block 854). At block 856 the system then performs the requested function by enabling logging of opted-in data while disabling logging of remaining privacy sensitive data elements.

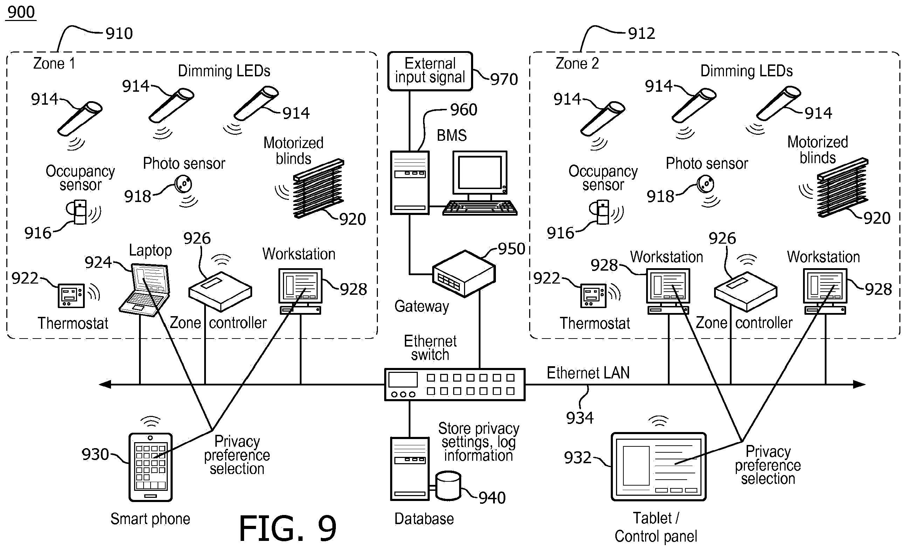

Figure 9 illustrates a system 900 for implementing the principles of the invention as depicted in the exemplary processing shown herein. In this exemplary system embodiment 900, input data is received from a plurality of Zones 910, 912. This input data is obtained from one or more occupancy sensors 916, photo sensors 918 and thermostats 922. As similarly illustrated in Figures 1 and 2, an integrated controller 926 is located in each zone to utilize these input data items to control one or more lighting fixtures 914 and motorized blinds 920 located in each zone. Zone 1 depicts the presence of a single laptop computer 924 and a workstation 928 while Zone 2 depicts two workstations being present. The invention is not so limited as any number of such devices as can reasonably be expected in an office environment can be present in each zone. Further, as illustrated, additional input devices such as a smart phone 930 and tablet/control panel 932 are contemplated by the invention. Any and all of such devices are capable of being linked via a wireless or wired LAN and Gateway 950 to communicate with the Building Management System (BMS) computer 960. Accordingly, any of such devices have the capability of providing user selection of privacy settings as described above. Of course, the system requires proper configuration of the devices and appropriate user control security be implemented prior to such setting / changing of privacy settings.

As described above, once user privacy options are selected for one or more users, the system records data in accordance with those selections onto a database 940. This database is subsequently accessible by the Building Management System computer 960 to generate various analyses and reports to include those that are well-known in the NLCS field.

It should be noted that while depicted as an Ethernet LAN 934 in Figure 9, alternative embodiments may include other well-known components of remote and wired communication networks, e.g., ISA, PCI, PCMCIA bus, one or more internal connections of a circuit, circuit card or other device, as well as portions and combinations of these and other communication media.

Laptop 924, workstation 928, smart phone 930 and Tablet/control panel 932 may be representative of a handheld calculator, special purpose or general purpose processing system, desktop computer, laptop computer, palm computer, or personal digital assistant (PDA) device, etc., as well as portions or combinations of these and other devices that can perform the operations illustrated.

Computer 960 may be a central processing unit (CPU) or dedicated hardware/software, such as a PAL, ASIC, FGPA, operable to execute computer instruction code or a combination of code and logical operations. In one embodiment, processor 960 may include code which, when executed by the processor, performs the operations illustrated herein. The code may be contained in the processor memory, may be read or downloaded from a memory medium such as a CD-ROM or floppy disk, may be provided by a manual input device, such as a keyboard or a keypad entry, or may be read from a magnetic or optical medium via one of the external inputs 970. It should be noted that in additional embodiments of the invention, these external inputs 970 would also include signals related to weather and/or signals from internet or third party systems (e.g., demand response signals).

As one skilled in the art would recognize, the terms processor, processing system, computer or computer system may represent one or more processing units in communication with one or more memory units and other devices, e.g., peripherals, connected electronically to and communicating with the at least one processing unit. Furthermore, the devices illustrated may be electronically connected to the one or more processing units via internal busses, e.g., serial, parallel, ISA bus, microchannel bus, PCI bus, PCMCIA bus, USB, etc., or one or more internal connections of a circuit, circuit card or other device, as well as portions and combinations of these and other communication media, or an external network, e.g., the Internet and Intranet. In other embodiments, hardware circuitry may be used in place of, or in combination with, software instructions to implement the invention. For example, the elements illustrated herein may also be implemented as discrete hardware elements or may be integrated into a single unit.

As would be understood, the operations illustrated may be performed sequentially or in parallel using different processors to determine specific values. Processing system 710 may further receive or transmit data over one or more network connections from a server or servers over, e.g., a global computer communications network such as the Internet, Intranet, a wide area network (WAN), a metropolitan area network (MAN), a local area network (LAN), a terrestrial broadcast system, a cable network, a satellite network, a wireless network, or a telephone network (POTS), as well as portions or combinations of these and other types of networks. As will be appreciated, network 934 may also comprise internal networks or one or more internal connections of a circuit, circuit card or other device, as well as portions and combinations of these and other communication media or an external network, e.g., the Internet and Intranet.

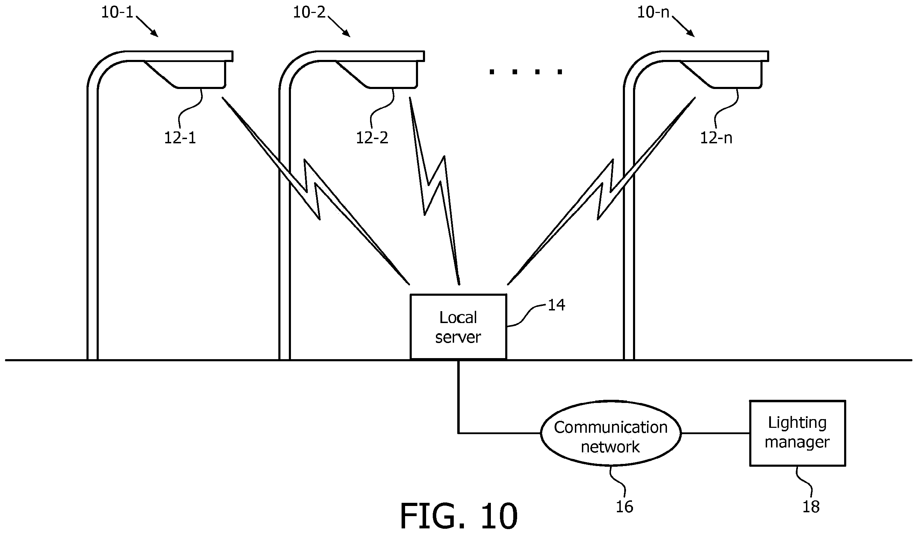

Figure 10 is a block diagram of an outdoor lighting system using streetlights that contain various sensors according to a further embodiment of the present invention. Referring to Figure 10, the system includes lighting units 12-1 to 12-n installed in a plurality of streetlights 10-1 to 10-n. According to the present invention, each of the lighting units 12-1 to 12-n includes one or more lighting elements and one or more sensors for monitoring its installation area. In an alternative embodiment, the sensors need not be integrated into the lighting unit, but rather be another wireless or wired device in the TLMS that can communicate with one or more lighting units and/or with a lighting manager 18. In further embodiments, the lighting units do not always have to directly communicate with a local server 14 - that is, they may also form a mesh network, where lighting units use other nearby lighting units to communicate with the local server 14.

As illustrated in Figure 10, the communication network comprises communication with the lighting manager 18 through a local server 14. While Figure 10 illustrates wireless communication with lighting units 12, it should be noted that the invention is not limited to this embodiment as other types of communication are contemplated by the invention, to include the various communication means described above with respect to Figure 9. As data is collected from these sensors, it is transmitted to the lighting manager 18 where it is time-stamped and stored with appropriate indexing as to its location of origin.

## Claims

1. A method for protecting the privacy of an individual in a space in which data is capable of being collected and stored by a lighting control system (900),
the lighting control system being one of a central lighting control system and a networked lighting control system and including a network for communicating the data to a computer,
wherein the data relate to the individual's work space and comprises sensor data,
the method comprising:
displaying to the individual a menu by which the individual can select various privacy settings pertaining to such data, the privacy settings including whether the data can be associated with the individual or not, wherein the privacy settings comprise one of
an "Opt Out" option, whereby the individual can specify one or more data element categories for which data associated with the individual's work space is not to be collected,
an "Opt In" option, whereby the individual can specify one or more data element categories for which data associated with the individual's work space is permitted to be collected such that only the data of these data element categories are to be collected,
an "Opt De-Identify" option, whereby the individual can specify one or more data element categories for which data associated with his work space is permitted to be collected but said collected data is incapable of being linked to his work space, and
an "Opt Restricted Use" option, whereby the individual can limit what purposes the collected data associated with his work space is permitted to be used;
recording one or more selections of said privacy settings made by the individual in the computer;
controlling one or more lighting fixtures using the sensor data and,
collecting the data in accordance with the recorded selections in a database associated with the computer.

2. The method of claim 1 wherein the lighting control system is a Hybrid Integrated Lighting and Daylight Control system and the data relates to the individual's work space (910).

3. The method of claim 1 wherein the collecting step comprises obtaining information from devices, said devices consisting of a camera, a light (914), a sensor, a dimming ballast, a user interface, motorized blinds (920), and combinations thereof.

4. The method of claim 3 wherein said sensors are selected from the group consisting of an occupancy sensor (916), a motion detector (130), a light sensor (918), a thermal sensor, a temperature sensor, a humidity sensor, and combinations thereof.

5. The method of claim 1 further comprising:
reporting of any collected data in accordance with the recorded selections.

6. A lighting control system (900) that provides protection of the privacy of an individual in an area in which data is capable of being collected and stored by the lighting control system,
the lighting control system being one of a central lighting control system and a networked lighting control system,
wherein the data relates to the individual's work space and comprises sensor data,
the system comprising:
a plurality of devices for which data related to the area can be obtained;
a network for communicating the data to a computer (960); and **characterized by** the system comprising
a means for providing the individual a menu by which he can select various privacy settings related to collecting the data, and transmitting said settings to the computer,
the privacy settings including whether the data can be associated with the individual or not, wherein the privacy settings comprise one of
an "Opt Out" option, whereby the individual can specify one or more data element categories for which data associated with the individual's work space is not to be collected,
an "Opt In" option, whereby the individual can specify one or more data element categories for which data associated with the individual's work space is permitted to be collected such that only the data of these data element categories are to be collected,
an "Opt De-Identify" option, whereby the individual can specify one or more data element categories for which data associated with his work space is permitted to be collected but said collected data is incapable of being linked to his work space, and
an "Opt Restricted Use" option, whereby the individual can limit what purposes the collected data associated with his work space is permitted to be used; and
the system further comprising:
means for controlling one or more lighting fixtures using the sensor data and
a database (940) associated with the computer wherein data is collected in accordance with said selection of said privacy settings.

7. The system of claim 6 wherein the devices consist of a camera, a light (914), a sensor, a dimming ballast, a user interface, motorized blinds (920), and combinations thereof.

8. The system of claim 7 wherein the sensors are selected from the group consisting of an occupancy sensor (916), a motion detector (130), a light sensor (918), a thermal sensor, a temperature sensor, a humidity sensor, and combinations thereof.

9. The system of claim 6 wherein the computer generates collected data reports in accordance with said selections.

10. The system of claim 6 wherein the means for providing is selected from the group consisting of a special purpose or general purpose processing system, a desktop (928) computer, a laptop computer (924), a palm computer, a personal digital assistant (PDA), a smart phone (930), and combinations thereof.

11. A computer-readable, non-transitory medium having stored therein instructions for causing at least one processing unit to execute a method according to claim 1.

## Patentansprüche

1. Verfahren zur Wahrung des Datenschutzes einer Person in einem Bereich, in dem Daten von einem Beleuchtungssteuerungssystem (900) erfasst und gespeichert werden können,
wobei das Beleuchtungssteuerungssystem ein zentrales Beleuchtungssteuerungssystem und ein vernetztes Beleuchtungssteuerungssystem ist und ein Netzwerk zum Übermitteln der Daten an einen Computer beinhaltet,
wobei die Daten auf den Arbeitsbereich der Person bezogen sind und Sensordaten umfassen,
wobei gemäß dem Verfahren:
der Person ein Menü angezeigt wird, mittels dem die Person verschiedene, solche Daten betreffende Datenschutzeinstellungen auswählen kann, wobei die Datenschutzeinstellungen beinhalten, ob die Daten der Person zugeordnet werden können oder nicht, wobei die Datenschutzeinstellungen eines umfassen von:
einer "Opt Out"-Option, wodurch die Person eine oder mehrere Datenelementkategorien angeben kann, für die dem Arbeitsbereich der Person zugeordnete Daten nicht zu erfassen sind,
einer "Opt In"-Option, wodurch die Person eine oder mehrere Datenelementkategorien angeben kann, für die dem Arbeitsbereich der Person zugeordnete Daten erfasst werden dürfen, derart, dass nur die Daten dieser Datenelementkategorien erfasst werden,
einer "Opt De-Identify"-Option, wodurch die Person eine oder mehrere Datenelementkategorien angeben kann, für die ihrem Arbeitsbereich zugeordnete Daten erfasst werden dürfen, die erfassten Daten jedoch nicht mit ihrem Arbeitsbereich verknüpft werden können, und
einer "Opt Restricted Use"-Option, wodurch die Person eingrenzen kann, zu welchen Zwecken die ihrem Arbeitsbereich zugeordneten, erfassten Daten verwendet werden dürfen;
eine oder mehrere Auswahlen der von der Person vorgenommenen Datenschutzeinstellungen in dem Computer aufgezeichnet werden;
ein oder mehrere Beleuchtungskörper, die die Sensordaten verwenden, gesteuert werden und,
die Daten entsprechend den aufgezeichneten Auswahlen in einer Datenbank, die dem Computer zugeordnet ist, erfasst werden.

2. Verfahren nach Anspruch 1, wobei das Beleuchtungssteuerungssystem ein hybrid-integriertes Beleuchtungs- und Tageslichtsteuerungssystem ist und die Daten auf den Arbeitsbereich (910) einer Person bezogen sind.

3. Verfahren nach Anspruch 1, wobei der Erfassungsschritt das Erhalten von Informationen von Geräten/Vorrichtungen umfasst, wobei die Geräte/Vorrichtungen aus einer Camera, einer Lampe (914), einem Sensor, einem dimmbaren Vorschaltgerät, einer Anwenderschnittstelle, motorangetriebenen Rollläden (920) sowie Kombinationen aus diesen bestehen.

4. Verfahren nach Anspruch 3, wobei die Sensoren aus der Gruppe, bestehend aus einem Anwesenheitssensor (916), einem Bewegungsdetektor (130), einem Lichtsensor (918), einem Wärmesensor, einem Temperatursensor, einem Feuchtigkeitssensor sowie Kombinationen aus diesen, ausgewählt werden.

5. Verfahren nach Anspruch 1, wonach weiterhin:
erfasste Daten entsprechend den aufgezeichneten Auswahlen angezeigt werden.

6. Beleuchtungssteuerungssystem (900) zur Wahrung des Datenschutzes einer Person in einem Bereich, in dem Daten von dem Beleuchtungssteuerungssystem erfasst und gespeichert werden können,
wobei das Beleuchtungssteuerungssystem ein zentrales Beleuchtungssteuerungssystem oder ein vernetztes Beleuchtungssteuerungssystem ist,
wobei die Daten auf den Arbeitsbereich der Person bezogen sind und Sensordaten umfassen,
wobei das System umfasst:
mehrere Geräte/Vorrichtungen, für die auf den Bereich bezogene Daten erhalten werden können;
ein Netzwerk zur Übertragung der Daten zu einem Computer (960); und **dadurch gekennzeichnet ist, dass** das System umfasst
ein Mittel, um für die Person ein Menü bereitzustellen, mittels dem sie verschiedene, auf die Erfassung von Daten bezogene Datenschutzeinstellungen auswählen kann, und um die Einstellungen zu dem Computer zu übertragen,
wobei die Datenschutzeinstellungen beinhalten, ob die Daten der Person zugeordnet werden können oder nicht, wobei die Datenschutzeinstellungen eines umfassen von
einer "Opt Out"-Option, wodurch die Person eine oder mehrere Datenelementkategorien angeben kann, für die dem Arbeitsbereich der Person zugeordnete Daten nicht zu erfassen sind,
einer "Opt In"-Option, wodurch die Person eine oder mehrere Datenelementkategorien angeben kann, für die dem Arbeitsbereich der Person zugeordnete Daten erfasst werden dürfen, derart, dass nur die Daten dieser Datenelementkategorien erfasst werden,
einer "Opt De-Identify"-Option, wodurch die Person eine oder mehrere Datenelementkategorien angeben kann, für die ihrem Arbeitsbereich zugeordnete Daten erfasst werden dürfen, die erfassten Daten jedoch nicht mit ihrem Arbeitsbereich verknüpft werden können, und
einer "Opt Restricted Use"-Option, wodurch die Person eingrenzen kann, zu welchen Zwecken die ihrem Arbeitsbereich zugeordneten, erfassten Daten verwendet werden dürfen; und
wobei das System ferner umfasst:
Mittel zum Steuern des einen oder der mehreren Beleuchtungskörper unter Verwendung der Sensordaten und
eine dem Computer zugeordnete Datenbank (940), wobei Daten entsprechend der Auswahl der Datenschutzeinstellungen erfasst werden.

7. System nach Anspruch 6, wobei die Geräte/Vorrichtungen aus einer Camera, einer Lampe (914), einem Sensor, einem dimmbaren Vorschaltgerät, einer Anwenderschnittstelle, motorangetriebenen Rollläden (920) sowie Kombinationen aus diesen bestehen.

8. System nach Anspruch 7, wobei die Sensoren aus der Gruppe, bestehend aus einem Anwesenheitssensor (916), einem Bewegungsdetektor (130), einem Lichtsensor (918), einem Wärmesensor, einem Temperatursensor, einem Feuchtigkeitssensor sowie Kombinationen aus diesen, ausgewählt werden.

9. System nach Anspruch 6, wobei der Computer Reports erfasster Daten entsprechend den Auswahlen erzeugt.

10. System nach Anspruch 6, wobei das Mittel zur Bereitstellung aus der Gruppe, bestehend aus einem speziellen oder Mehrzweck-Verarbeitungssystem, einem Desktop-Computer (928), einem Laptop-Computer (924), einem Palm-Computer, einem persönlichen digitalen Assistenten (PDA), einem Smartphone (930) sowie Kombinationen aus diesen, ausgewählt wird.

11. Computerlesbares, nicht-transitorisches Medium mit darauf gespeicherten Anweisungen, um zu bewirken, dass mindestens eine Verarbeitungseinheit ein Verfahren nach Anspruch 1 ausführt.

## Revendications

1. Procédé de protection de la vie privée d'un individu dans un espace dans lequel des données sont capables d'être collectées et mémorisées par un système de commande d'éclairage (900),
le système de commande d'éclairage étant l'un d'un système de commande d'éclairage central et d'un système de commande d'éclairage en réseau et incluant un réseau de communication des données à un ordinateur,
dans lequel les données concernent l'espace de travail de l'individu et comprennent des données de capteur,
le procédé comprenant :
l'affichage, à l'individu, d'un menu par lequel l'individu peut sélectionner divers réglages de respect de la vie privée concernant de telles données, les réglages de respect de la vie privée comprenant si les données peuvent être associées à l'individu ou non, dans lequel les réglages de respect de la vie privée comprennent l'un parmi
une option de non-participation, de telle manière que l'individu puisse spécifier une ou plusieurs catégories d'éléments de données pour lesquelles des données associées à l'espace de travail de l'individu ne doivent pas être collectées,
une option de participation, de telle manière que l'individu puisse spécifier une ou plusieurs catégories d'éléments de données pour lesquelles des données associées à un espace de travail de l'individu sont autorisées à être collectées de façon à ce que seules les données de ces catégories d'éléments de données doivent être collectées,
une option de participation sans identification, de telle manière que l'individu puisse spécifier une ou plusieurs catégories d'éléments de données pour lesquelles des données associées à son espace de travail sont autorisées à être collectées mais lesdites données collectées ne peuvent pas être liées à son espace de travail, et
une option de participation à usage restreint, de telle manière que l'individu puisse limiter les raisons pour lesquelles les données collectées associées à son espace de travail peuvent être utilisées ;
l'enregistrement d'une ou plusieurs sélections desdits réglages de respect de la vie privée effectuées par l'individu dans l'ordinateur ;
la commande d'un ou plusieurs luminaires à l'aide des données de capteur et,
la collecte des données en fonction des sélections enregistrées dans une base de données associée à l'ordinateur.

2. Procédé selon la revendication 1, dans lequel le système de commande d'éclairage est un système de commande de lumière du jour et d'éclairage intégré hybride et les données concernent l'espace de travail de l'individu (910).

3. Procédé selon la revendication 1, dans lequel l'étape de la collecte comprend l'obtention d'informations à partir du dispositif, lesdits dispositifs se composant d'une caméra, d'un éclairage (914), d'un capteur, d'un ballast de gradation, d'une interface utilisateur, de stores motorisés (920), et de combinaisons de ceux-ci.

4. Procédé selon la revendication 3, dans lequel lesdits capteurs sont sélectionnés dans le groupe se composant d'un capteur d'occupation (916), d'un détecteur de mouvement (130), d'un capteur de lumière (918), d'un capteur thermique, d'un capteur de température, d'un capteur d'humidité, et de combinaisons de ceux-ci.

5. Procédé selon la revendication 1, comprenant en outre :
le rapport de données collectées en fonction des sélections enregistrées.

6. Système de commande d'éclairage (900) assurant une protection de la vie privée d'un individu dans une zone dans laquelle des données sont capables d'être collectées et mémorisées par le système de commande d'éclairage,
le système de commande d'éclairage étant l'un d'un système de commande d'éclairage central et d'un système de commande d'éclairage en réseau,
dans lequel les données concernent l'espace de travail de l'individu et comprennent des données de capteur,
le système comprenant :
une pluralité de dispositifs pour lesquels des données relatives à la zone peuvent être obtenues ;
un réseau pour communiquer les données à un ordinateur (960) ; et **caractérisé en ce que** le système comprend
un moyen pour fournir à l'individu un menu par lequel l'individu peut sélectionner divers réglages de respect de la vie privée concernant la collecte des données, et transmettre lesdits réglages à l'ordinateur,
les réglages de respect de la vie privée incluant si les données peuvent être associées à l'individu ou non, dans lequel les réglages de respect de la vie privée comprennent l'une parmi
une option de non-participation, de telle manière que l'individu puisse spécifier une ou plusieurs catégories d'éléments de données pour lesquelles des données associées à l'espace de travail de l'individu ne doivent pas être collectées.
une option de participation, de telle manière que l'individu puisse spécifier une ou plusieurs catégories d'éléments de données pour lesquelles des données associées à l'espace de travail de l'individu sont autorisées à être collectées de façon à ce que seules les données de ces catégories d'éléments de données doivent être collectées,
une option de participation sans identification, de telle manière que l'individu puisse spécifier une ou plusieurs catégories d'éléments de données pour lesquelles des données associées à son espace de travail sont autorisées à être collectées mais lesdites données collectées ne peuvent pas être liées à son espace de travail, et
une option de participation à usage restreint, de telle manière que l'individu puisse limiter les raisons pour lesquelles les données collectées associées à son espace de travail peuvent être utilisées ; et
le système comprenant en outre :
un moyen de commande d'un ou plusieurs luminaires à l'aide des données de capteur et
une base de données (940) associée à l'ordinateur, dans lequel des données sont collectées en fonction de ladite sélection desdits réglages de respect de la vie privée.

7. Système selon la revendication 6, dans lequel les dispositifs se composent d'une caméra, d'un éclairage (914), d'un capteur, d'un ballast de gradation, d'une interface utilisateur, de stores motorisés (920), et de combinaisons de ceux-ci.

8. Système selon la revendication 7, dans lequel les capteurs sont sélectionnés dans le groupe se composant d'un capteur d'occupation (916), d'un détecteur de mouvement (130), d'un capteur de lumière (918), d'un capteur thermique, d'un capteur de température, d'un capteur d'humidité, et de combinaisons de ceux-ci.

9. Système selon la revendication 6, dans lequel l'ordinateur génère des rapports de données collectées en fonction desdites sélections.

10. Système selon la revendication 6, dans lequel les moyens de fourniture sont sélectionnés dans le groupe se composant d'un système de traitement d'usage spécial ou polyvalent, d'un ordinateur de bureau (928), d'un ordinateur portable (924), d'un ordinateur de poche, d'un assistant numérique personnel (PDA), d'un smartphone (930) et de combinaisons de ceux-ci.

11. Support non transitoire lisible par ordinateur dans lequel sont mémorisées des instructions pour amener au moins une unité de traitement à exécuter un procédé selon la revendication 1.
